(19) **Europäisches Patentamt**

**European Patent Office**

**Office européen des brevets**

(11) **EP 1 417 690 B1**

(12) **EUROPÄISCHE PATENTSCHRIFT**

(45) Veröffentlichungstag und Bekanntmachung des Hinweises auf die Patenterteilung:
**19.01.2005 Patentblatt 2005/03**

(21) Anmeldenummer: **02794720.9**

(22) Anmeldetag: **07.08.2002**

(51) Int Cl.⁷: **H01F 10/32**

(86) Internationale Anmeldenummer:
**PCT/DE2002/002898**

(87) Internationale Veröffentlichungsnummer:
**WO 2003/017295 (27.02.2003 Gazette 2003/09)**

(54) **SCHICHTENSYSTEM MIT ERHÖHTEM MAGNETORESISTIVEN EFFEKT SOWIE VERWENDUNG DESSELBEN**

LAYER SYSTEM HAVING AN INCREASED MAGNETORESISTIVE EFFECT AND USE OF THE SAME

SYSTEME DE COUCHES A EFFET MAGNETORESISTIF RENFORCE ET SON UTILISATION

(84) Benannte Vertragsstaaten:
**DE FR GB**

(30) Priorität: **16.08.2001 DE 10140043**

(43) Veröffentlichungstag der Anmeldung:
**12.05.2004 Patentblatt 2004/20**

(73) Patentinhaber: **SIEMENS AKTIENGESELLSCHAFT**
**80333 München (DE)**

(72) Erfinder: **BOEVE, Hans**
**NL-5551 MH Valkenswaard (NL)**

(56) Entgegenhaltungen:
• **DATABASE INSPEC [Online] INSTITUTE OF ELECTRICAL ENGINEERS, STEVENAGE, GB; JANG S H ET AL: "The analysis of spin valve with the spin flop by a thickness difference in the synthetic antiferromagnet" Database accession no. 7286495 XP002227439**
• **DIMOPOULOS T ET AL: "ENHANCED ROBUSTNESS AND TUNNEL MAGNETORESISTANCE IN ARTIFICIAL FERRIMAGNET BASED TUNNEL JUNCTIONS" JOURNAL OF APPLIED PHYSICS, AMERICAN INSTITUTE OF PHYSICS. NEW YORK, US, Bd. 87, Nr. 9, 1. Mai 2000 (2000-05-01), Seiten 4685-4687, XP000947664 ISSN: 0021-8979**
• **OUNADJELA K ET AL: "DEPENDENCE OF THE INTERLAYER EXCHANGE COUPLING ON THE CONSTITUTION OF THE MAGNETIC LAYERS" JOURNAL OF APPLIED PHYSICS, AMERICAN INSTITUTE OF PHYSICS. NEW YORK, US, Bd. 79, Nr. 8, PART 2A, 15. April 1996 (1996-04-15), Seiten 4528-4530, XP000695546 ISSN: 0021-8979**
• **DATABASE INSPEC [Online] INSTITUTE OF ELECTRICAL ENGINEERS, STEVENAGE, GB; KI-SEOK MOON ET AL: "MR characteristics of synthetic ferrimagnet based spin-valves with different pinning layer thickness ratios" Database accession no. 6883441 XP002227440 & INTERMAG 2000 DIGEST OF TECHNICAL PAPERS. 2000 IEEE INTERNATIONAL MAGNETICS CONFERENCE, TORONTO, ONT., CANADA, 9-13 APRIL 2000, Bd. 36, Nr. 5, pt.1, Seiten 2857-2859, IEEE Transactions on Magnetics, Sept. 2000, IEEE, USA ISSN: 0018-9464**
• **DATABASE INSPEC [Online] INSTITUTE OF ELECTRICAL ENGINEERS, STEVENAGE, GB; COLIS S ET AL: "Thermal stability of spin valve sensors using artificial Co/Ir based ferrimagnets" Database accession no. 7332969 XP002227441 & MML01: 4TH INTERNATIONAL CONFERENCE ON METALLIC MULTILAYERS, AACHEN, GERMANY, 24-29 JUNE 2001, Bd. 240, Nr. 1-3, Seiten 186-188, Journal of Magnetism and Magnetic Materials, Feb. 2002, Elsevier, Netherlands ISSN: 0304-8853**

• **K.Y.KIM ET AL: "Interlayer coupling in spin valves with CoFe/Ru/CoFe/FeMn synthetic antiferromagnets" JOURNAL OF APPLIED PHYSICS., Bd. 89, Nr. 11, 1. Juni 2001 (2001-06-01), Seiten 7612-7615, XP001072883 AMERICAN INSTITUTE OF PHYSICS. NEW YORK., US ISSN: 0021-8979**

**Beschreibung**

Die Erfindung bezieht sich auf ein Schichtensystem mit erhöhtem magnetoresistiven Effekt, umfassend mindestens eine Detektionsschicht aus einem weichmagnetischen Material, mindestens eine an der Detektionsschicht anliegende Entkopplungsschicht aus einem nicht-magnetischen Material sowie mindestens ein durch die Entkopplungsschicht bezüglich der Detektionsschicht beabstandetes, einen künstlichen Antiferromagneten bildendes und von der Detektionsschicht entkoppeltes Schichtenteilsystem. Dieses Teilsystem weißt wenigstens eine zweite, an die Entkopplungsschicht angrenzende ferromagnetische Schicht und wenigstens eine erste ferromagnetische Schicht auf, welche mit der zweiten ferromagnetischen Schicht über eine Kopplungsschicht aus nicht-magnetischem Material antiferromagnetisch gekoppelt ist sowie eine von der zweiten ferromagnetischen Schicht verschiedene Materialzusammensetzung aufweist. Ein derartiges Schichtsystem ist aus "Journ. Appl. Phys.", Vol. 87, No. 9, 01. Mai 2000, Seiten 4685 bis 4687 zu entnehmen. Die Erfindung betrifft ferner Verwendungsmöglichkeiten eines solchen Schichtensystems.

Die Verwendung entsprechender Schichtensysteme ist insbesondere für Messwandler, Magnetokoppler oder Stromsensoren vorgeschlagen worden. Ein solches Schichtensystem weist als einen wichtigen Bestandteil ein Untersystem oder Teilsystem auf, das einen sogenannten künstlichen Antiferromagneten (Abkürzung: "AAF" = artificial antiferromagnet) bildet. Ein solches AAF-Teilsystem ist aufgrund einer verhältnismäßig hohen magnetischen Steifigkeit und einer geringen Kopplung bezüglich einer magnetisch weicheren Detektions- oder Messschicht durch den sogenannten Orange-Peel-Effekt und/oder durch makroskopische magnetostatische Kopplungsfelder von Vorteil.

Der Aufbau entsprechender AAF-Teilsysteme ist prinzipiell bekannt (vgl. WO 94/15223 A). Dieses System besteht in der Regel aus wenigstens zwei ferromagnetischen Schichten, die über eine Kopplungsschicht aus nichtmagnetischem Material antiferromagnetisch gekoppelt sind. Es kann z.B. aus zwei magnetischen Co-Schichten und einer antiferromagnetischen Kopplungsschicht aus Cu gebildet werden (vgl. z.B. "IEEE Trans. Magn.", Vol. 32, No. 5, Sept. 1996, Seiten 4624 bis 4626, oder Vol. 34, No. 4, July 1998, Seiten 1336 bis 1338, oder "Journ. Magn. Magn. Mat.", Vol. 165, 1997, Seiten 524 bis 528).

Um die magnetische Steifigkeit eines solchen AAF-Teilsystems, also seine Resistenz gegenüber externen äußeren Magnetfeldern, zu verbessern, ist es bekannt, an der der Detektionsschicht abgewandten , nachfolgend als eine erste ferromagnetische Schicht betrachteten Schicht des Teilsystems eine antiferromagnetische Zusatzschicht anzuordnen. Über diese antiferromagnetische Zusatzschicht wird die somit direkt benachbarte (erste) ferromagnetische Schicht auf Grund einer vorhandenen Austauschkopplung in ihrer Magnetisierung zusätzlich gepinnt, so dass das AAF-Teilsystem insgesamt magnetisch härter wird (sogenanntes "exchange pinning" oder "exchange biasing"). Ein entsprechendes AAF-Teilsystem mit einem solchen "exchange pinning" ist in "Journ. Magn. Magn. Mat.", Vol. 239, 2002, Seiten 179 bis 181 beschrieben.

Aus Gründen der Beschränkung des Verfahrensaufwandes bei der Herstellung entsprechender Schichtensysteme und ihrer AAF-Teilsysteme ist man bisher im Allgemeinen davon ausgegangen, dass die beiden ferromagnetischen Schichten des AAF-Teilsystems aus dem selben ferromagnetischen Material wie z.B. aus Co oder einer Co-Legierung bestehen. Dabei hat man gegebenenfalls unterschiedliche Schichtdicken dieser beiden ferromagnetischen Schichten eingeplant, um gegebenenfalls eine Ausrichtung der Magnetisierung zu ermöglichen oder zu verbessern. Die Anpassung eines solchen AAF-Teilsystems in magnetischer Hinsicht an die übrigen Teile des Schichtensystems ist dementsprechend beschränkt.

Stehen Gesichtspunkte der Beschränkung des Verfahrensaufwandes weniger im Vordergrund, so hat man für AAF-Teilsysteme ohne Zusatzschicht zum "exchange pinning" ferromagnetische Schichten mit verschiedener Materialzusammensetzung gewählt. Ein entsprechendes Teilsystem ist bei dem aus der eingangs genannten Literaturstelle aus "Journ. Appl. Phys." zu entnehmenden Schichtensystem vorgesehen. Bei diesem System ist nicht erkennbar, wie diese ferromagnetischen Schichten bzgl. einer weichmagnetischen Detektionsschicht angeordnet sein . sollen.

Aufgabe der vorliegenden Erfindung ist es, das Schichtensystem mit den eingangs genannten Merkmalen dahingehend auszugestalten, dass bei einer hinreichend großen Flexibilität hinsichtlich der Anpassung seines AAF-Teilsystems eindeutige Magnetisierungsverhältnisse in diesem einzustellen sind.

Diese Aufgabe wird erfindungsgemäß mit den in Anspruch 1 angegebenen Maßnahmen gelöst. Dabei wird von der Überlegung ausgegangen, dass dies nur dadurch zu erreichen ist, wenn die erste ferromagnetische Schicht an ihrer der Kopplungsschicht abgewandten Seite mit einer antiferromagnetischen Zusatzschicht versehen und mit dieser austauschgekoppelt ist und wenn diese erste ferromagnetische Schicht außerdem magnetisch härter als die zweite ferromagnetische Schicht ist. Selbstverständlich muss dabei die antiferromagnetische Kopplung zwischen den beiden ferromagnetischen Schichten aufrechterhalten bleiben.

Es soll demnach aus Gründen des Magnetisierungsverhaltens des Teilsystems die erste ferromagnetische Schicht magnetisch härter als die zweite ferromagnetische Schicht gewählt sein. Für ein erfindungsgemäßes Schichtensystem ist es nämlich zwingend, dass sich die oberste, der Entkopplungsschicht zugewandte ferromagnetische Schicht (hier: die zweite ferromagnetische Schicht) bei einem anfänglichen Magnetisieren (sogenannte "Grundmagnetisierung") in einem äußeren Magnetfeld, dem sogenannten Initialisieren, ummagnetisiert. Dieser Prozess geschieht durch einen 180°-Schaltvorgang, an dem oft Domänenwände beteiligt sind. Diese Wände können nun in der schaltenden ferromagnetischen Schicht (= zweite ferromagnetische Schicht) sogenannte 360°-Wände erzeugen, die sich ungünstig auf den magnetoresitiven Effekt auswirken können. Es wurde erkannt, dass bei Verwendung eines magnetisch weicheren Materials für die obere, zweite ferromagnetische Schicht die Ausbildung solcher unerwünschten 360°-Wände zu vermeiden ist. Insbesondere die Zahl der 360°-Wände (bzw. ihr Flächenanteil) nimmt dadurch ab.

Die mit der erfindungsgemäßen Ausgestaltung des Schichtensystems verbundenen,Vorteile sind auch in einer Erhöhung des Freiheitsgrades bezüglich einer Optimierung des AAF-Teilsystems zu sehen. So können insbesondere folgende Optimierungen vorgenommen werden hinsichtlich

- der indirekten Austauschkopplung (sogenannte "RKKY"-Kopplung) zwischen den beiden ferromagnetischen Schichten über die nicht-magnetische Kopplungsschicht,
- der direkten antiferromagnetischen Austauschkopplung zwischen der antiferromagnetischen Zusatzschicht und der anliegenden ersten ferromagnetischen Schicht,
- der magnetischen Dreheigenschaften (bzw. Einstellbarkeit der Magnetisierungsrichtung) der ersten ferromagnetischen Schicht

sowie

- der sogenannten Neel-Kopplung zwischen der zweiten ferromagnetischen Schicht und der davon entkoppelten weichmagnetischen Detektionsschicht.

Vorteilhafte Ausgestaltungen des erfindungsgemäßen Schichtensystems gehen aus den abhängigen Ansprüchen hervor.

So kann die zweite ferromagnetische Schicht aus einer CoFe-Legierung mit einem vergleichsweise geringeren Co-Anteil als dem der ersten ferromagnetischen Schicht bestehen, wodurch sie magnetisch weicher wird.

Die erwähnte Ummagnetisierung der zweiten ferromagnetischen Schicht des Schichtenteilsystems wird auch dadurch unterstützt, dass die erste ferromagnetische Schicht eine größere Dicke als die zweite ferromagnetische Schicht hat.

Das Material der antiferromagnetischen Zusatzschicht wird vorteilhaft aus der Gruppe NiO, FeMn, IrMn, NiMn, TbMn, CrPtMn, RhMn, PtMn und PdMn gewählt.

Die Kopplungsschicht besteht vorzugsweise aus einem Material aus der Edelmetallgruppe, insbesondere aus der Gruppe Cu, Ag, Au, Pd und Ru.

Die Vorteile der erfindungsgemäßen Ausgestaltung des Schichtensystems kommen insbesondere zum Tragen, wenn es als XMR-System ausgebildet ist.

Besonders vorteilhaft kann das Schichtensystems nach der der Erfindung in einem Magnetfeldsensor wie z. B. einem Stromsensor oder in einem Magnetokoppler verwendet werden.

Weitere vorteilhafte Ausgestaltungen des erfindungsgemäßen Schichtensystems gehen aus den vorstehend nicht angesprochenen Ansprüchen hervor.

Zur weiteren Erläuterung der Erfindung wird nachfolgend auf die Zeichnung Bezug genommen, in deren

Figur 1    schematisch ein Schichtensystem nach der Erfindung angedeutet ist.
Figur 2    zeigt eine Detailansicht eines AAF-Teilsystems dieses Schichtensystems nach Figur 1.

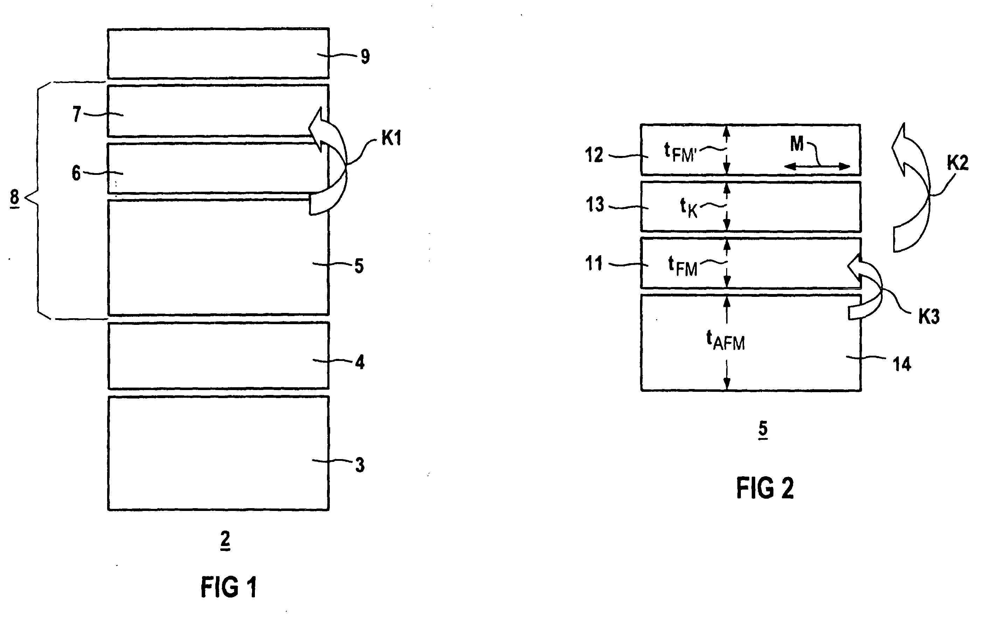

Bei dem in Figur 1 im Schnitt angedeuteten Schichtensystem 2 nach der Erfindung wird von bekannten Mehrschichtensystemen ausgegangen, die einen erhöhten magnetoresistiven Effekt ΔR/R zeigen. Der magnetoresistive Effekt dieses Systems ist dementsprechend gegenüber bekannten magnetoresistiven Einschichtsystemen mit anisotropem magnetoresistiven Effekt ("AMR"-Effekt) größer und liegt insbesondere oberhalb von 2 % bei Raumtemperatur. Das Schichtensystem ist entweder giantmagnetoresistiv ("GMR") oder tunnel-magnetoresistiv ("TMR") oder kolossal-magnetoresistiv ("CMR") oder zeigt eine Riesenmagnetoimpedanz bzw. einen Riesenwechselstromwiderstand ("GMI"). Die Unterschiede entsprechender Schichtensysteme sind z.B. in dem Band "XMR-Technologien" - Technologieanalyse: Magnetismus, Bd. 2 - des VDI-Technologiezentrums "Physikalische Technologien", Düsseldorf (DE) 1997, Seiten 11 bis 46 dargelegt. Dabei stellt der Begriff "XMR-Technologien" den Oberbegriff des auf den Magnetowiderstandseffekten AMR, GMR, TMR, CMR und GMI beruhenden technischen Know-hows dar. Bevorzugt ist das erfindungsgemäße Schichtensystem ein GMR- oder TMR-System, wobei es einen sogenannten "Spin-Valve"-Aufbau hat.

Zum Aufbau des erfindungsgemäßen Schichtensystems 2 ist auf einem Substrat 3 in an sich bekannter Weise zunächst eine Pufferschicht oder ein Pufferschichtensystem 4 als Unterlage für ein darauf abzuscheidendes Schichtenteilsystem 5 vorgesehen. Bei diesem Teilsystem soll es sich um ein verhältnismäßig hartmagnetisches Teilsystem handeln, das auch als Referenzschichtensystem bezeichnet wird. Dieses nachfolgend als ein AAF-Schichtenteilsystem (vgl. die genannte WO 94/15223 A) wirkende Teilsystem 5 ist auf seiner von dem Substrat 3 abgewandten (oberen) Seite gegenüber einer weichmagnetischen Schicht 7 oder einem entsprechenden Schichtensystem über eine Zwischenschicht 6 aus einem nicht-magnetischen Material beabstandet. Diese Zwischenschicht kann im Falle eines GMR-Schichtensystems aus einem metallischen Material sein, während sie im Falle eines TMR-Schichtensystems aus einem isolierenden oder einem halbleitenden Material besteht. Die weichmagnetische Schicht 7 ist an das vergleichsweise magnetisch härtere Schichtenteilsystem 5 nur schwach gekoppelt oder gegenüber diesem Teilsystem entkoppelt. Die Zwischenschicht 6 kann deshalb als Entkopplungsschicht angesehen werden. In der Figur ist eine mögliche Orangenhautkopplung und magnetostatische durch einen geschwungenen Pfeil Kl angedeutet. Die Schicht 6 gewährleistet, dass die weichmagnetische Schicht 7 hinsichtlich der Ausrichtung ihrer Magnetisierung praktisch frei ist. Mit ihr ist deshalb die Funktion einer Detektionsschicht oder einer Messschicht auszuüben. Statt einer einzigen derartigen Detektionsschicht können auch entsprechend wirkende Schichtsysteme wie z.B. aus zwei ferromagnetischen Schichten oder einem System aus einer ferromagnetischen, einer nicht-magnetischen und einer ferromagnetischen Schicht (ein sogenanntes "synthetisches freies Schichtsystem") vorgesehen werden.

Wie in der Figur durch eine geschwungene Klammer angedeutet sein soll, kann sich der Aufbau des Untersystems 8 aus dem Teilsystem 5, der darauf befindlichen mindestens einen Zwischenschicht 6 und der darauf angeordneten mindestens einen freien Magnetschicht 7 in an sich bekannter Weise periodisch wiederholen (vgl. die genannte WO 94/15223 A). Im Allgemeinen ist das Schichtensystem noch mit einer Deckschicht 9 versehen, die z.B. aus Schutzgründen die darunter liegenden Schichten gegen Oxidationsprozesse schützen soll. Für TMRund GMR-Anwendungen, bei denen ein Strom senkrecht durch den Schichtenstapel fließt, muss die Deckschicht elektrisch leitend sein, z.B. aus Au oder Cr bestehen, da sie dann zugleich eine obere Elektrode bildet. Für TMR-Anwendungen ist z.B. eine untere Elektrode, beispielsweise in Form einer 30 nm dicken Cu-Schicht, in die Pufferschicht 4 integriert. Bei dem Substrat 3 kann es sich um einen Si-Waver oder um eine andere Oberfläche eines anderen, an sich beliebigen Aufbaus, beispielsweise einer Struktur der Halbleitertechnologie, handeln. Selbstverständlich kann die Reihenfolge der Schichten des Unterschichtsystems 8 bezüglich des Substrats 3 und seiner Pufferschicht 4 auch umgekehrt vorgesehen sein.

Das für das erfindungsgemäße Schichtensystem 2 nach Figur 1 zu verwendende Referenzschichten- oder AAF-Teilsystem 5 geht aus dem Schnitt der Figur 2 näher hervor. Die Grundbausteine dieses Schichtenteilsystems 5 sind wenigstens eine zweite, der Entkopplungsschicht 6 zugewandte Schicht 12 der Dicke $t_{FM'}$ aus einem ferromagnetischen Material der Sättigungsmagnetisierung $M_{FM'}$ und wenigstens eine erste Schicht 11 der Dicke $t_{FM}$ aus einem ferromagnetischen Material der Sättigungsmagnetisierung $M_{FM}$. Diese beiden ferromagnetischen Schichten 11 und 12 sollen über eine Kopplungsschicht 13 der Dicke $t_K$ aus einem nicht-magnetischen Material, das in der Regel ein Edelmetall wie z.B. Cu ist, antiferromagnetisch gekoppelt sein. Diese Kopplung soll in der Figur durch einen geschwungene Pfeil K2 angedeutet sein. Zusätzlich ist an der ersten ferromagnetischen Schicht 11 an deren der Kopplungsschicht 13 abgewandten Seite eine antiferromagnetische Zusatzschicht 14 der Dicke $T_{AFM}$ vorgesehen, die in an sich bekannter Weise mit der anliegenden Schicht 11 austauschgekoppelt ist. Diese Kopplung soll in der Figur durch einen geschwungene Pfeil K3 angedeutet sein. Im Allgemeinen liegt die Dicke $t_{AFM}$ der zusätzlichen antiferromagnetischen Schicht 14 deutlich über der von der an sie angrenzenden ersten ferromagnetischen Schicht 11 und typischerweise unter 30 nm, vorzugsweise unter 10 nm.

Gemäß der Erfindung soll nun die erste ferromagnetische Schicht 11 eine andere Materialzusammensetzung als die zweite ferromagnetische Schicht 12 aufweisen und zugleich gegenüber der zweiten ferromagnetischen Schicht magnetisch härter sein. Unter einer Materialzusammensetzung sei hierbei ein anderes elementares Metall oder eine Metalllegierung verstanden, die sich hinsichtlich der Legierungspartner und/oder der Anteile der Legierungspartner unterscheidet. Zusätzlich können sich die beiden ferromagnetischen Schichten 11 und 12 auch vorteilhaft hinsichtlich ihrer Dicken $t_{FM}$ bzw. $t_{FM'}$ unterscheiden, wobei vorzugsweise die zweite ferromagnetische Schicht 12 eine geringere Dicke $t_{FM'}$ als die erste ferromagnetische Schicht 11 mit der Dicke $t_{FM}$ besitzt. Im Allgemeinen liegt die Dicke $t_{FM}$ der ersten ferromagnetischen Schicht 11 und/oder die Dicke $t_{FM'}$ der zweiten ferromagnetischen Schicht 12 jeweils unter 5 nm, während die Dicke $t_K$ der Kopplungsschicht 13 bevorzugt unter 3 nm liegt.

Als Materialien für die ferromagnetischen Schichten 11 und 12 kommen in bekannter Weise die drei ferromagnetischen Elemente Fe, Co oder Ni oder Legierungen mit oder aus diesen drei Elementen in Frage. Gegebenenfalls können noch weitere Elemente wie z.B. Seltene Erden hinzulegiert sein. So lassen sich durch geeignete Wahl der Legierungsbestandteile die magnetischen Eigenschaften der beiden ferromagnetischen Schichten 11 und 12 gezielt einstellen. So kann z.B. für die (zweite) Schicht 12 eine CoFe-Legierung mit einem Co-Anteil von über 60 Atom-%, typischerweise von 90 Atom-%, verwendet werden, um so eine bekanntermaßen magnetisch verhältnismäßig weiche Legierung mit kleiner Magnetostriktion zu erhalten. Demgegenüber wird man dann für die (erste) ferromagnetischen Schicht 11 vorzugsweise eine CoFe-Legierung mit einem vergleichsweise geringeren Co-Anteil als bei der zweiten ferromagnetischen Schicht 12 wählen, wobei der Co-Anteil der ersten ferromagnetischen Schicht 11 vorzugsweise unter 60 Atom-%, beispielsweise etwa 50 Atom-%, beträgt. Solche Legierungen sind bekanntermaßen als magnetisch verhältnismäßig hart anzusehen.

Die nicht-magnetische Kopplungsschicht 13 besteht im Allgemeinen aus einem der hierfür bekannten nicht-magnetischen Metalle, insbesondere aus einem Edelmetall wie Cu, Ag, Au, Pd oder Ru, während für die antiferromagnetische Zusatzschicht 14 vorzugsweise ein Material aus der Gruppe NiO, FeMn, IrMn, NiMn, TbMn, CrPtMn, RhMn, PtMn, PdMn oder $FePt_3$ gewählt wird.

Eine RKKY-Kopplung zwischen unterschiedlichen Legierungen innerhalb des ferromagnetischen Stoffsystems Ni=Fe-Co wurden experimentell untersucht. Aus diesen Untersuchungen ist es bekannt, dass Co-reiche Legierungen zu den höchsten Werten der Kopplungsstärke führen, wenn als Materialien für die Kopplungsschicht 13 Cu oder Ru gewählt werden. Dabei wurde auch festgestellt, dass sich z.B. für die Legierungen $Co_{90}Fe_{10}$ und $Co_{50}Fe_{50}$ etwa gleiche Werte der Kopplungsstärke ergeben, während für $Ni_{80}Fe_{20}$ deutlich geringere Werte zu beobachten sind.

Zu einer Abschätzung der Kopplungsstärke sei zunächst ein einfaches AAF-Teilsystem ohne austauschgekoppelter Zusatzschicht 14 betrachtet. Dabei lässt sich die RKKY-Kopplungsstärke $J_{RKKY}$ unter Zugrundelegung einer Sättigungsmagnetisierung $M_x$ und einer Schichtdicke $t_x$ (mit x= jeweils FM oder FM') der jeweiligen ferromagnetischen Schicht durch folgende Beziehung aus der Sättigungsfelsstärke $H_s$ herleiten :

$$J_{RKKY} = H_S \cdot (t_{FM} \cdot M_{FM} \cdot t_{FM'} \cdot M_{FM'}) / (t_{FM} \cdot M_{FM} + t_{FM'} \cdot M_{FM'}).$$

Diese Kopplung lässt sich ohne weiteres optimieren, indem man die besten Materialkombinationen für die Schichten 11 bis 13 wählt.

Auf der anderen Seite ist für das erfindungsgemäße Schichtensystem eine austauschgekoppelte Zusatzschicht zu berücksichtigen. Hier ist das Kopplungsfeld $H_{Exch}$ der ferromagnetischen Schicht 12 bezüglich der angrenzenden antiferromagnetischen Zusatzschicht 14 generell umgekehrt proportional zu dem Produkt aus der Dicke $t_{FM}$ und der Sättigungsmagnetisierung $M_{FM}$ der ferromagnetischen Schicht 11, so dass gilt:

$$H_{Exch} = J_{Exch} / (t_{FM} \cdot M_{FM}),$$

wobei $J_{Exch}$ die Kopplungsenergie bedeutet.

Aus diesem Grunde ist eine Zunahme des Kopplungsfeldes zu beobachten, wenn zu ferromagnetischen Schichten mit geringerer Dicke oder geringerem magnetischen Moment übergegangen wird. Ferner ist zu beobachten, dass sich ein größeres Kopplungsfeld für die Legierung $Co_{50}Fe_{50}$ als für die vergleichsweise magnetisch weichere Legierung $Co_{90}Fe_{10}$ ergibt. Darüber hinaus zeigen Magnetisierungskurven für die Doppelschicht 14-11 (hier mit ferromagnetischer Schicht 11 aus $Co_{50}Fe_{50}$) ein abrupteres Schalten oder Umorientierung der gepinnten Zusatzschicht 14. Dies lässt sich aus der Rechteckform der Hystereseschleife erkennen und ist insbesondere bevorzugt, um das sogenannte magnetische Fenster in Winkelsensoranwendungen ( = Anwendungsbereich des Sensors in einem äußeren magnetischen Feld ) zu vergrößern. Hierbei wird das magnetische Fenster aus Winkelmessungen bestimmt, bei welchen die Referenzschicht ( hier die obere ferromagnetische Schicht 12 ) beginnt, sich in Feldrichtung zu drehen, wobei das Sensorsignal um 5 % reduziert wird. Folglich führt eine Verbesserung der Rechteckform der Hystereseschleife zu einem entsprechend höheren magnetischen Feldfenster. So zeigen z.B. Experimente für das Doppelschichtsystem 14-11 mit $IrMn$-$Co_{90}Fe_{10}$ eine ausgedehntere, S-förmige Hysteresekurve und erlauben dadurch nur eine Anwendung in einem beschränkten Fensterbereich.

Das in Figur 2 durch einen Doppelpfeil M angedeutete Umklappen bzw. eine entsprechende Drehung der Magnetisierung in der oberen zweiten ferromagnetischen Schicht 12 ist im Falle eines sogenannten inversen AAF-Systems kritisch, bei welchem die Richtung des Nettomomentes durch eine dicke untere (erste) ferromagnetische Schicht 11 bestimmt wird. Für ein austauschgekoppeltes AAF-System, wie es für das erfindungsgemäße Schichtensystem vorausgesetzt wird, ist dieses Konzept von Interesse, da in diesem Falle die Austauschkopplung und die anfängliche Sättigung des AAF-Systems simultan induziert werden können, und zwar bei einer hohen Temperatur und in einem starken magnetischen Feld. Dabei liegen die Temperaturen oberhalb der sogenannten Blocking-Temperatur des antiferromagnetischen Materials und oberhalb des Sättigungsfeldes $H_s$ des AAF-Systems. Darüber hinaus kann eine entsprechende inverse Schichtenfolge im Falle größerer TMR-Sensoren, wo eine magnetostatische Kopplung an den Rändern vernachlässigbar ist, zu einer Reduzierung und gegebenenfalls Unterbindung einer Neel-Kopplung führen, so dass dann Effekte zweiter Ordnung in den idealen sinoidalen Sensorcharakteristiken entsprechend reduziert werden.

Bei einem Schichtensystem mit inverser Schichtenfolge muss sich nach einer anfänglichen Magnetisierung des AAF-Teilsystems die obere ferromagnetische Schicht hinsichtlich ihrer Magnetisierung um 180° drehen. Der Erfolg eines derartigen Drehprozesses wird entscheidend beeinflusst durch die magnetischen Eigenschaften dieser Schicht. Er kann verbessert werden, indem eine Schicht mit einem vergleichsweise magnetisch weicheren Material und/oder eine Schicht mit einer vorgegebenen uniaxialen Anisotropie vorgesehen wird. Während des Drehprozesses lassen sich sehr stabile 360°-Domänenwände in einer solchen dünnen Schicht ausbilden. Diese Domänenwände entstehen bei lokalen Variationen der Richtung der magnetokristallinen Anisotropie zwischen Körnern und sind ziemlich schwierig zu beseitigen. Sie führen zu schlechteren Eigenschaften des Schichtensystems, was insbesondere an einem reduzierten magnetoresistiven Effekt zu erkennen ist. Außerdem sind nicht-idealen Schalteigenschaften der freien weichmagnetischen Detektionsschicht die Folge, die durch ein starkes Streufeld verursacht werden, das von der Domänenstruktur eines solchen AAF-Systems stammt. Aus diesem Grunde sind magnetisch weichere Legierungen wie $Co_{90}Fe_{10}$ eine bevorzugte Wahl, während $Co_{50}Fe_{50}$-Legierungen weniger geeignet sind. Selbstverständlich können unter diesem Aspekt auch andere Legierungen aus dem Ni-Co-Fe-Stoffsystem gewählt werden. Ebenso sind auch amorphe NiFeCo-Legierungen besonders geeignet, die eine geringere Sättigungsmagnetisierung besitzen und in denen verhältnismäßig leicht eine uniaxiale Anisotropie insbesondere mit Hilfe eines längeren Wärmebehandlungsschrittes einzustellen ist.

Die vorstehenden Überlegungen belegen, dass die Wahl eines gegenüber der magnetischen Härte der ersten ferromagnetischen Schicht 11 vergleichsweise weicheren magnetischen Materials für die zweite ferromagnetische Schicht 12 von besonderem Vorteil ist.

Ein entsprechendes konkretes Schichtensystem 2 nach der Erfindung mit einem Aufbau bzw. einer Schichtenfolge gemäß den Figuren 1 und 2 hat deshalb auf einem Substrat 3 z.B. aus einem Si-Wafer sukzessive folgende Schichten:

a) als Pufferschicht 4 ein 3-Schichtsystem aus Ta von 5 nm Dicke, aus Cu von 30 nm Dicke und aus Ru von 5 nm Dicke,

b) als eine antiferromagnetische Zusatzschicht 14 eine IrMn-Schicht mit 8 nm Dicke,

c) als eine erste ferromagnetische Schicht 11 eine $Co_{50}Fe_{50}$-Schicht mit einer Dicke $t_{FM}$ von 2,5 nm,

d) als eine nicht-magnetische Kopplungsschicht 13 eine Ru-Schicht mit einer Dicke $t_K$ von 0,8 nm,

e) als eine zweite ferromagnetische Schicht 12 eine $CO_{90}Fe_{10}$-Schicht mit einer Dicke $t_{FM}'$ von 1,5 nm,

f) als eine nicht-magnetische Entkopplungsschicht 6 im Falle eines GMR-Schichtsystems eine Cu-Schicht mit einer Dicke von 2,5 nm und im Falle eines TMR-Schichtsystems eine $AlO_x$-Schicht mit einer Dicke von 1,5 nm,

g) als eine freie weichmagnetische Detektionsschicht 7 eine $Ni_{80}Fe_{20}$-Schicht von 6 nm Dicke oder eine $CO_{90}Fe_{10}$/$Ni_{08}Fe_{20}$-Doppelschicht mit einer Dicke der entsprechenden Materialien von 1 nm bzw. 4 nm und

h) eine Deckschicht 9 aus Ta mit einer Dicke von 5 nm.

**Patentansprüche**

1. Schichtensystem (2) mit erhöhtem magnetoresistiven Effekt, umfassend

- mindestens eine Detektionsschicht (7) aus einem weichmagnetischem Material,
- mindestens eine an der Detektionsschicht (7) anliegende Entkopplungsschicht (6) aus einem nicht-magnetischem Material

sowie

- mindestens ein durch die Entkopplungsschicht (6) bezüglich der Detektionsschicht (7) beabstandetes, einen künstlichen Antiferromagneten bildendes und von der Detektionsschicht (7) entkoppeltes Schichtenteilsystem (5), das

a) wenigstens eine zweite, an die Entkopplungsschicht (6) angrenzende ferromagnetische Schicht (12) und
b) wenigstens eine erste ferromagnetische Schicht (11) aufweist, welche

b1) mit der zweiten ferromagnetischen Schicht (12) über eine Kopplungsschicht (13) aus nicht-magnetischem Material antiferromagnetisch gekoppelt ist sowie
b2) eine von der zweiten ferromagnetischen Schicht (12) verschiedene Materialzusammensetzung aufweist
**dadurch gekennzeichnet, dass** die erste ferromagnetische Schicht
b3) an ihrer der Kopplungsschicht (13) abgewandten Seite mit einer antiferromagnetischen Zusatzschicht (14) versehen und mit dieser austauschgekoppelt ist,

und

b4) magnetisch härter als die zweite ferromagnetische Schicht (12) ist.

2. Schichtensystem nach Anspruch 1, **dadurch gekennzeichnet, dass** die erste ferromagnetische Schicht (11) aus einer CoFe-Legierung mit einem vergleichsweise geringeren Co-Anteil als bei der zweiten ferromagnetischen Schicht (12) besteht.

3. Schichtensystem nach Anspruch 2, **dadurch gekennzeichnet, dass** der Co-Anteil der ersten ferromagnetischen Schicht (11) unter 60 Atom-% beträgt.

4. Schichtensystem nach einem der vorangehenden Ansprüche, **dadurch gekennzeichnet, dass** die erste ferromagnetische Schicht (11) eine größere Dicke ($t_{FM}$) als die zweite ferromagnetische Schicht (12) hat.

5. Schichtensystem nach einem der vorangehenden Ansprüche, **dadurch gekennzeichnet, dass** die Dicke ($t_{FM}$) der ersten ferromagnetischen Schicht (11) und/oder die Dicke ($t_{FM'}$) der zweiten ferromagnetischen Schicht (12) jeweils unter 5 nm liegen/liegt.

6. Schichtensystem nach einem der vorangehenden Ansprüche, **dadurch gekennzeichnet, dass** die antiferromagnetische Zusatzschicht (14) aus einem Material aus der Gruppe NiO, FeMn, IrMn, NiMn, TbMn, CrPtMn, RhMn, PtMn, PdMn oder $FePt_3$ gewählt ist.

7. Schichtensystem nach einem der vorangehenden Ansprüche, **dadurch gekennzeichnet, dass** die Dicke ($t_{AFM}$) der antiferromagnetischen Zusatzschicht (14) unter 30 nm, vorzugsweise unter 10 nm liegt.

8. Schichtensystem nach einem der vorangehenden Ansprüche, **dadurch gekennzeichnet, dass** die Kopplungsschicht (13) aus einem Material aus der Edelmetallgruppe, insbesondere aus der Gruppe Cu, Ag, Au, Pd und Ru, gewählt ist.

9. Schichtensystem nach einem der vorangehenden Ansprüche, **dadurch gekennzeichnet, dass** die Dicke ($t_K$) der Kopplungsschicht (13) unter 3 nm liegt.

10. Schichtensystem nach einem der vorangehenden Ansprüche, **gekennzeichnet durch** eine Ausbildung als XMR-System.

11. Verwendung des Schichtensystems nach einem der vorangehenden Ansprüche in einem Magnetfeldsensor oder einem Magnetokoppler.

**Claims**

1. Layer system (2) having an increased magnetoresistive effect, comprising

- at least one detection layer (7) made from a soft-magnetic material,
- at least one decoupling layer (6) which bears against the detection layer (7) and is made from a nonmagnetic material,

and

- at least one layer part-system (5) which is spaced apart from the detection layer (7) by the decoupling layer (6), forms an artificial antiferromagnet, is decoupled from the detection layer (7) and

a) includes at least one second ferromagnetic layer (12), which adjoins the decoupling layer (6), and
b) at least one first ferromagnetic layer (11), which

b1) is antiferromagnetically coupled to the second ferromagnetic layer (12) via a coupling layer (13) made from nonmagnetic material
b2) has a material composition which differs from the second ferromagnetic layer (12) **characterized**

**in that** the first ferromagnetic layer
and
b3) is provided, on its side facing away from the coupling layer (13), with an antiferromagnetic additional layer (14), to which it is exchange-coupled,
and
b4) is magnetically harder than the second ferromagnetic layer (12).

2. Layer system according to Claim 1, **characterized in that** the first ferromagnetic layer (11) consists of a CoFe alloy with in relative terms a lower Co content than the second ferromagnetic layer (12).

3. Layer system according to Claim 2, **characterized in that** the Co content of the first ferromagnetic layer (11) is less than 60 atomic %.

4. Layer system according to one of the preceding claims, **characterized in that** the first ferromagnetic layer (11) has a greater thickness ($t_{FM}$) than the second ferromagnetic layer (12).

5. Layer system according to one of the preceding claims, **characterized in that** the thickness ($t_{FM}$) of the first ferromagnetic layer (11) and/or the thickness ($t_{FM'}$) of the second ferromagnetic layer (12) is/are in each case less than 5 nm.

6. Layer system according to one of the preceding claims, **characterized in that** the antiferromagnetic additional layer (14) is made from a material selected from the group consisting of NiO, FeMn, IrMn, NiMn, TbMn, CrPtMn, RhMn, PtMn, PdMn or $FePt_3$.

7. Layer system according to one of the preceding claims, **characterized in that** the thickness ($t_{AFM}$) of the antiferromagnetic additional layer (14) is less than 30 nm, preferably less than 10 nm.

8. Layer system according to one of the preceding claims, **characterized in that** the coupling layer (13) is made from a material selected from the group of noble metals, in particular from the group consisting of Cu, Ag, Au, Pd and Ru.

9. Layer system according to one of the preceding claims, **characterized in that** the thickness ($t_K$) of the coupling layer (13) is less than 3 nm.

10. Layer system according to one of the preceding claims, **characterized by** its design as an XMR system.

11. Use of layer system according to one of the preceding claims in a magnetic field sensor or a magneto coupler.


**Revendications**

1. Système de couches (2) à effet magnétorésistif renforcé qui comprend

- au moins une couche de détection (7) en un matériau magnétique doux,
- au moins une couche de découplage (6) en un matériau non magnétique et appliquée à la couche de détection (7), ainsi que
- au moins un système partiel de couches (5), qui est maintenu à distance de la couche de détection (7) par la couche de découplage (6), qui forme une substance antiferromagnétique artificielle et qui est découplé de la couche de détection (7) ; il comporte

a) au moins une deuxième couche (12) ferromagnétique voisine de la couche de découplage (6) et
b) au moins une première couche ferromagnétique (11) qui

b1) est couplée de façon antiferromagnétique à la deuxième couche ferromagnétique (12) par l'intermédiaire d'une couche de couplage (13) en un matériau non magnétique et
b2) dont le matériau a une composition différente de la deuxième couche ferromagnétique (12)
**caractérisé en ce que** la première couche ferromagnétique,
b3) sur son côté éloigné de la couche de couplage (13) est munie d'une couche supplémentaire (14) antiferromagnétique et présente un couplage d'échange avec celle-ci et

b4) a une dureté magnétique plus grande que la deuxième couche ferromagnétique (12).

2. Système de couches selon la revendication 1, **caractérisé en ce que** la première couche ferromagnétique (11 ) est en un alliage CoFe dont la proportion en Co est comparativement plus petite que celle de la deuxième couche ferromagnétique (12).

3. Système de couches selon la revendication 2, **caractérisé en ce que** la proportion en Co de la première couche ferromagnétique (11) est inférieure à 60 % en atomes.

4. Système de couches selon l'une des revendications précédentes, **caractérisé en ce que** la première couche ferromagnétique (11) a une épaisseur ($t_{FM}$) plus grande que la deuxième couche ferromagnétique (12).

5. Système de couches selon l'une des revendications précédentes, **caractérisé en ce que** l'épaisseur ($t_{FM}$) de la première couche ferromagnétique (11) et/ou l'épaisseur ($t_{FM'}$) de la deuxième couche ferromagnétique (12) est respectivement inférieure à 5 nm.

6. Système de couches selon l'une des revendications précédentes, **caractérisé en ce que** la couche supplémentaire (14) antiferromagnétique est en un matériau choisi parmi le groupe N iO, F eMn, IrMn, N iMn T bMn, C rPtMn, RhMn, PtMn, PdMn ou FePt$_3$.

7. Système de couches selon l'une des revendications précédentes, **caractérisé en ce que** l'épaisseur ($t_{AFM}$) de la couche supplémentaire (14) antiferromagnétique est inférieure à 30 nm, de préférence inférieure à 10 nm.

8. Système de couches selon l'une des revendications précédentes, **caractérisé en ce que** la couche de couplage (13) est en un matériau choisi parmi le groupe des métaux précieux, en particulier le groupe Cu, Ag, Au, Pd et Ru.

9. Système de couches selon l'une des revendications précédentes, **caractérisé en ce que** l'épaisseur ($t_K$) de la couche de couplage (13) est inférieure à 3 nm.

10. Système de couches selon l'une des revendications précédentes, **caractérisé par** une conception sous forme de système XMR.

11. Utilisation du système de couches selon l'une des revendications précédentes dans un capteur de champ magnétique ou dans un coupleur magnétique.

**FIG 1**

2

5

**FIG 2**

EP 1 417 690 B1